# EUROPÄISCHE PATENTSCHRIFT

(11) **EP 1 319 482 B1**
(45) Veröffentlichungstag und Bekanntmachung des Hinweises auf die Patenterteilung: **27.07.2005**
(21) Anmeldenummer: 02021552.1
(22) Anmeldetag: 26.09.2002
(51) Int. Cl.: B27B 17/04, B27F 5/06

(54) **Führungsschiene für umlaufend angetriebene kettenförmige Werkzeuge**
Guide rail for rotatively driven chain tools
Guide pour un outil en chaîne entraîné en rotation

(30) Priorität: 14.12.2001 DE 20120244 U
(43) Veröffentlichungstag der Anmeldung: 18.06.2003
(73) Patentinhaber: Mafell AG, 78727 Oberndorf (DE)
(72) Erfinder: Eisenbeis Dieter, 72160 Horb (DE); Hölle, Rudolf, 78727 Oberndorf-Boll (DE)
(74) Vertreter: Manitz, Finsterwald & Partner GbR

(56) Entgegenhaltungen:
- CH-A- 404 352
- DE-A- 2 326 551
- DE-C- 19 529 608
- FR-A- 1 024 242

## Beschreibung

Die Erfindung betrifft eine Führungsschiene für umlaufend angetriebene, kettenförmige Werkzeuge, insbesondere Fräsketten für Kettenstemmer, gemäß dem Oberbegriff von Anspruch 1 (siehe auch FR1024242).

Umlaufend angetriebene, kettenförmige Werkzeuge, wie sie bei sogenannten Kettenstemmern in Form von Fräsketten verwendet werden, müssen nicht nur gewährleisten, dass die Fräskette längs der Führungsschiene sicher geführt wird, sondern es muss auch sichergestellt sein, dass die am freien Ende der Führungsschiene vorgesehene Umlenkeinheit hohe Verschleissfestigkeit aufweist und damit unter Gewährleistung der geforderten Betriebssicherheit eine lange Lebensdauer besitzt.

Da die diesbezüglichen Anforderungen ständig gesteigert werden, ist es die Aufgabe der vorliegenden Erfindung, eine Führungsschiene der eingangs angeführten Art hinsichtlich Leistungsfähigkeit und Lebensdauer mit konstruktiv einfachen Mitteln und damit in wirtschaftlicher Weise zu verbessern.

Gelöst wird diese Aufgabe nach der Erfindung durch eine Führungschiene gemäß Anspruch 1.

Nach einer besonders vorteilhaften Ausgestaltung der Erfindung sind als Wälzlager Kugellager vorgesehen, deren gegenseitiger Abstand in der gabelförmigen Ausnehmung des Endbereichs der Führungsschiene durch einen auf der Lagerachse angebrachten Distanzring bestimmt sind, an dem die Lagerringe beider Kugellager anliegen, während die Laufringe beider Kugellager an einem gleiche axiale Abmessungen wie der Distanzring aufweisenden Ansatz anliegen, der innenseitig in Form eines Ringes an die Laufrolle angeformt ist.

Durch das Zusammenspiel des Kugellagerpaares mit der dieses umschließenden und zu einer Laufeinheit zusammenfassenden Laufrolle werden die aus der Verwendung von Kugellagern resultierenden Vorteile hinsichtlich Leichtgängigkeit und hoher Lebensdauer kombiniert mit den frei wählbaren Festigkeitseigenschaften der Laufrolle erhalten, so dass insgesamt eine langlebige und praktisch wartungsfreie Umlenkeinheit erhalten wird.

Die Schmierung erfolgt einmalig durch die Fettfüllung der abgedichteten Kugellager. Sie muss während der gesamten Lebensdauer nicht mehr gewartet werden. Die bisher üblicherweise eingebaute Fettstopfbuchse kann entfallen.

Besonders vorteilhafte Ausgestaltungen und Weiterbildungen der Erfindung sind in den Unteransprüchen angegeben.

Ein Ausführungsbeispiel der Erfindung wird nachfolgend unter Bezugnahme auf die Zeichnung erläutert; in der Zeichnung zeigt:
- Fig. 1: eine schematische Draufsicht einer Führungsschiene mit angedeuteter Fräskette,
- Fig. 2: eine Seitenansicht der Führungsschiene nach Fig. 1,
- Fig. 3: eine Schnittansicht entsprechend der Linie A-A von Fig. 2, und
- Fig. 4: eine vergrößerte Darstellung der Umlenkeinheit gemäß Einzelheit X in Fig. 3.

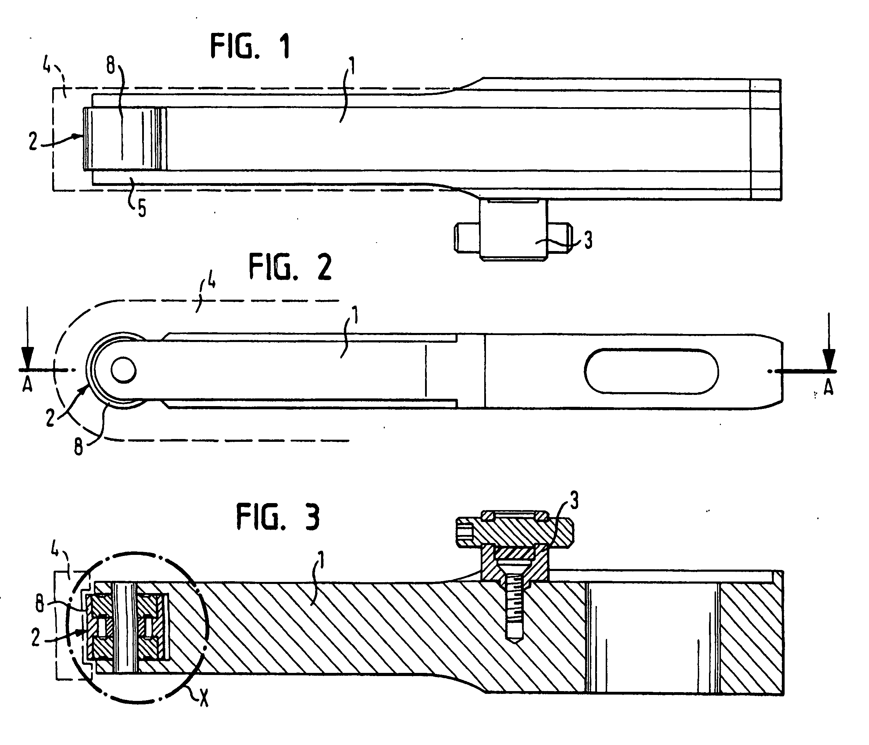

Fig. 1 zeigt eine Führungsschiene 1, an deren freiem Ende eine Umlenkeinheit 2 für eine schematisch angedeutete Fräskette 4 vorgesehen ist. Die Führungsschiene ist mit einer herkömmlichen Kettenspanneinheit 3 ausgerüstet.

Das freie Ende der Führungsschiene 1 ist als gabelförmiger Endbereich 5 ausgebildet, wobei die Umlenkeinheit 2 so in diesem Gabelbereich angeordnet ist, dass sie nur geringfügig und wie für die Führung der Fräskette 4 erforderlich nach außen übersteht. Die Fräskette 4 führt sich selbst an den Außenkanten der Schiene und an den Außenkanten der Umlenkeinheit 2.

Die Seitenansicht nach Fig. 2 lässt zum einen den vorstehend erwähnten Überstand der Umlenkeinheit 2 bzw. deren Laufrolle 8 über den gabelförmigen Bereich und zum anderen den Verlauf der Fräskette 4 im Bereich der Umlenkeinheit 2 erkennen.

Die in Fig. 3 gezeigte Schnittansicht entsprechend der Linie A-A von Fig. 2 zeigt den Aufbau der Umlenkeinheit 2.

Die schematische Darstellung der Fräskette 4 verdeutlicht, in welcher Weise die äußeren Kettenglieder die Außenkanten der Laufrolle 8 umgreifen.

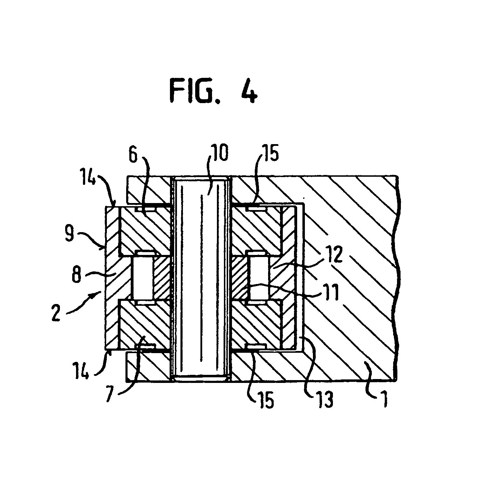

Die Detaildarstellung der Einzelheit X aus Fig. 3 in der bezüglich Fig. 3 vergrößerten Fig. 4 zeigt den Endbereich der Führungsschiene 1 mit der Umlenkeinheit 2.

Die Umlenkeinheit 2 wird gebildet von zwei gegenseitig beabstandeten, auf einer Lagerachse 10 angebrachten Kugellagern 6, 7 und der diese beiden Kugellager 6, 7 umschließenden Laufrolle 8.

Diese Gesamteinheit ist in der Ausnehmung 13 des gabelförmigen Endbereichs der Führungsschiene 1 untergebracht, wobei durch diese Umlenkeinheit 2 der gesamte Raum der Ausnehmung 13 weitgehend eingenommen wird und das Kugellagerpaar 6, 7 in Richtung der Lagerachse 10 praktisch spielfrei in der Ausnehmung 13 aufgenommen ist, wozu zwischen den Lagerringen der Kugellager 6, 7 und den angrenzenden Wandungen der gabelförmigen Ausnehmung 13 zweckmäßigerweise Passscheiben 15 vorgesehen sind.

Zwischen den Lagerringen der Kugellager 6, 7 ist ein deren gegenseitigen Abstand bestimmender Distanzring 11 auf der Achse 10 vorgesehen. Ein in Axialrichtung der Abmessung des Distanzringes entsprechender Distanzansatz 12 an der Innenseite der Laufrolle 8 befindet sich zwischen den beiden Laufringen der Kugellager 6, 7, so dass eine form- und kraftschlüssige Einheit zwischen der Laufrolle 8 und den beiden Laufringen der Kugellager 6, 7 geschaffen wird.

Für die Laufrolle 8 kann das in Abhängigkeit von den auftretenden Beanspruchungen jeweils optimale Material, z.B. eine MnCr-Legierung, verwendet werden.

### Bezugszeichenliste

- 1: Führungsschiene
- 2: Umlenkeinheit
- 3: Kettenspanneinheit
- 4: Fräskette
- 5: gabelförmiger Endbereich
- 6: Kugellager
- 7: Kugellager
- 8: Laufrolle
- 9: Außenfläche der Laufrolle
- 10: Lagerachse
- 11: Distanzring
- 12: Distanzansatz
- 13: Ausnehmung
- 14: Stirnflächen der Laufrolle
- 15: Passscheibe

## Patentansprüche

1. Führungsschiene für umlaufend angetriebene, kettenförmige Werkzeuge, insbesondere Fräsketten für Kettenstemmer, mit einem die jeweilige Kette führenden Schienenteil mit einer an dessem freien Ende in einem gabelförmigen Endbereich vorgesehener Umlenkeinheit,
**dadurch gekennzeichnet,**
**dass** die Umlenkeinheit (2) ein in dem gabelförmigen Endbereich (5) der Führungsschiene (1) gelagertes Wälzlagerpaar (6, 7) mit einer das Wälzlagerpaar (6, 7) kraftschlüssig umschließenden, außenseitig zylindrisch ausgebildeten Laufrolle (8) umfasst.

2. Führungsschiene nach Anspruch 1,
**dadurch gekennzeichnet,**
**dass** als Wälzlager Kugellager (6, 7) vorgesehen sind, deren gegenseitiger Abstand in der gabelförmigen Ausnehmung (13) des Endbereichs (5) der Führungsschiene (1) durch einen auf der Lagerachse (10) angebrachten Distanzring (11) bestimmt ist, an dem die Lagerringe beider Kugellager (6, 7) anliegen.

3. Führungsschiene nach Anspruch 1 oder 2,
**dadurch gekennzeichnet,**
**dass** die Laufrolle (8) innenseitig mit einem insbesondere ringförmig ausgebildeten, mittig gelegenen Distanzansatz (12) versehen ist, an dem die Laufringe beider Kugellager (6, 7) anliegen.

4. Führungsschiene nach einem der vorhergehenden Ansprüche,
**dadurch gekennzeichnet,**
**dass** die axiale Länge der Laufrolle (8) gleich der Summe der axialen Erstreckung der beiden Kugellager (6, 7) sowie des dazwischen angeordneten Distanzringes (11) ist.

5. Führungsschiene nach einem der vorhergehenden Ansprüche,
**dadurch gekennzeichnet,**
**dass** die in Richtung der Lagerachse (10) gemessene Breite der Ausnehmung (13) nur geringfügig größer ist als die axiale Länge der Laufrolle (8).

6. Führungsschiene nach einem der vorhergehenden Ansprüche,
**dadurch gekennzeichnet,**
**dass** die Stirnflächen (14) der Laufrolle (8) Führungen für die sie randseitig übergreifende Fräskette (4) bilden.

7. Führungsschiene nach einem der vorhergehenden Ansprüche,
**dadurch gekennzeichnet,**
**dass** die Umlenkeinheit (2) mit ihren Außenabmessungen im wesentlichen an die Ausnehmung (13) im Endbereich (5) der Führungsschiene (1) angepasst ist und der sich ergebende Überstand zumindest im wesentlichen auf die Laufrolle (8) und einen Teilbereich der Laufringe der Kugellager (6, 7) beschränkt ist.

8. Führungsschiene nach einem der vorhergehenden Ansprüche,
**dadurch gekennzeichnet,**
**dass** zwischen dem rotierenden Teil der Umlenkeinheit (2) und den ihr benachbarten Wandungen der Ausnehmung (13) zumindest einseitig eine Passscheibe (15) vorgesehen ist.

## Claims

1. A guide rail for rotationally driven, chain-type tools, in particular cutter chains for chain mortisers, comprising a rail part which guides the respective chain and has a deflection unit provided in a fork-like end region at its free end,
**characterised in that**
the deflection unit (2) includes a pair of rolling element bearings (6, 7) supported in the fork-like end region (5) of the guide rail (1) with a roller (8) which surrounds the pair of rolling element bearings (6, 7) in a force-transmitting manner and is formed cylindrically at the outer side.

2. A guide rail in accordance with claim 1, **characterised in that** ball bearings (6, 7) are provided as the rolling element bearings whose mutual spacing in the fork-like cut-out (13) of the end region (5) of the guide rail (1) is determined by a spacer ring (11) which is fitted to the bearing axle (10) and which is contacted by the races of both ball bearings (6, 7).

3. A guide rail in accordance with claim 1 or claim 2, **characterised in that** the roller (8) is provided at the inner side with a centrally disposed spacer nose (12), which is in particular formed in the shape of a ring and which is contacted by the races of both ball bearings (6, 7).

4. A guide rail in accordance with any one of the preceding claims, **characterised in that** the axial length of the roller (8) is equal to the sum of the axial extent of the two ball bearings (6, 7) and of the spacer ring (11) arranged between them.

5. A guide rail in accordance with any one of the preceding claims, **characterised in that** the width of the cut-out (13) measured in the direction of the bearing axle (10) is only slightly larger than the axial length of the roller (8).

6. A guide rail in accordance with any one of the preceding claims, **characterised in that** the end faces (14) of the roller (8) form guides for the cutting chain (4) which engages over them at the side.

7. A guide rail in accordance with any one of the preceding claims, **characterised in that** the deflection unit (2) is substantially matched in its outer dimensions to the cut-out (13) in the end region (5) of the guide rail (1); and **in that** the resulting projection is at least substantially limited to the roller (8) and to a part region of the races of the ball bearings (6, 7).

8. A guide rail in accordance with any one of the preceding claims, **characterised in that** a shim (15) is provided at at least one side between the rotating part of the deflection unit (2) and the walls of the cut-out (13) adjacent to it.

## Revendications

1. Rail de guidage pour outils en forme de chaîne entraînés en circulation, notamment des chaînes à mortaiser de mortaiseuses à chaîne, avec une partie de rail guidant la chaîne respective comportant sur son extrémité libre une unité de renvoi prévue dans une zone d'extrémité en forme de fourche,
**caractérisé en ce que**
l'unité de renvoi (2) comporte un couple de paliers de roulement (6, 7) monté dans la zone d'extrémité (5) en forme de fourche du rail de guidage (1), avec un galet de roulement (8) dont l'extérieur est agencé de façon cylindrique, qui enserre le couple de paliers de roulement (6, 7) par complémentarité de forces.

2. Rail de guidage selon la revendication 1,
**caractérisé en ce que**
des roulements à billes (6, 7) sont prévus en tant que paliers de roulement, dont l'écartement mutuel dans l'évidement (13) en forme de fourche de la zone d'extrémité (5) du rail de guidage (1) est défini par une bague d'écartement (11) fixée sur l'axe de palier (10), contre laquelle s'appliquent les bagues de palier des deux roulements à billes (6, 7).

3. Rail de guidage selon la revendication 1 ou 2,
**caractérisé en ce que**
le galet de roulement (8) est muni sur sa face intérieure d'un appendice d'écartement (12) situé au centre, qui est notamment agencé de façon annulaire, contre lequel s'appliquent les bagues de roulement des deux roulements à billes (6, 7).

4. Rail de guidage selon l'une des revendications précédentes,
**caractérisé en ce que**
la longueur axiale du galet de roulement (8) est égale à la somme de l'extension axiale des deux roulements à billes (6, 7), ainsi que de la bague d'écartement (11) disposée entre eux.

5. Rail de guidage selon l'une des revendications précédentes,
**caractérisé en ce que**
la largeur de l'évidement (13) mesurée en direction de l'axe de palier (10) n'est que faiblement supérieure à la longueur axiale du galet de roulement (8).

6. Rail de guidage selon l'une des revendications précédentes,
**caractérisé en ce que**
les faces frontales (14) du galet de roulement (8) forment des guidages pour la chaîne à mortaiser (4) empiétant sur ses bords.

7. Rail de guidage selon l'une des revendications précédentes,
**caractérisé en ce que**
les dimensions extérieures de l'unité de renvoi (2) sont pour l'essentiel adaptées à l'évidement (13) pratiqué dans la zone d'extrémité (5) du rail de guidage (1), et **en ce que** le dépassement en résultant est limité, au moins pour l'essentiel, au galet de roulement (8) et à une zone partielle des bagues de roulement des roulements à billes (6, 7).

8. Rail de guidage selon l'une des revendications précédentes,
**caractérisé en ce que**
une rondelle d'ajustage (15) est prévue, au moins d'un côté, entre la partie rotative de l'unité de renvoi (2) et les parois adjacentes de l'évidement (13).
